# EUROPEAN PATENT APPLICATION

(11) **EP 2 383 988 A1**
(43) Date of publication of application: **02.11.2011**
(21) Application number: 11162579.4
(22) Date of filing: 15.04.2011
(51) Int. Cl.: H04N 5/64

(54) **Receiver**

(30) Priority: 28.04.2010 JP 2010104264
(71) Applicant: Mitsumi Electric Co., Ltd., Tama-shi, Tokyo 206-8567 (JP)
(72) Inventor: Arata, Torao, Tokyo 206-8567 (JP); Furuya, Hitoshi, Tokyo 206-8567 (JP)
(74) Representative: Kopf, Korbinian Paul

(57) **Abstract**

A receiver includes a case main body with an opening for inserting an IC card; an electric power supply board provided in the case main body; a contact type IC card connector where the contact type IC card is expected to be connected; and a tuner configured to receive a digital broadcasting signal, wherein the contact type IC card connector is provided in a position so that an entirety of the contact type card is received in the case main body in a case where the contact type IC card is inserted through the inserting opening on the electric power supply board; and the tuner is situated in a position between the inserting opening and the contact type IC card connector, the position being where the tuner does not come in contact with the contact type IC card in the case where the contact type IC card is inserted.

## Description

### CROSS-REFERENCE TO RELATED APPLICATIONS

This patent application is based upon and claims the benefit of priority of Japanese Patent Application No. 2010-104264 filed on April 28, 2010, the entire contents of which are incorporated herein by reference.

### BACKGROUND OF THE INVENTION

### 1. Field of the Invention

The present invention generally relates to receivers. More specifically, the present invention relates to a receiver including a case main body with an opening for inserting a contact type IC card, an electric power supply board provided in the case main body, a contact type IC card connector where the contact type IC card is connected, and a tuner configured to receive a digital broadcasting signal.

### 2. Description of the Related Art

In recent years, a broadcasting method of television broadcasting has been changing from an analog method to a digital method. Based on the change of the broadcasting method, for example, a receiver configured to receive a digital broadcasting signal such as terrestrial television broadcasting and convert the broadcasting signal to an audio-visual signal which can be used by a normal television has been commercialized.

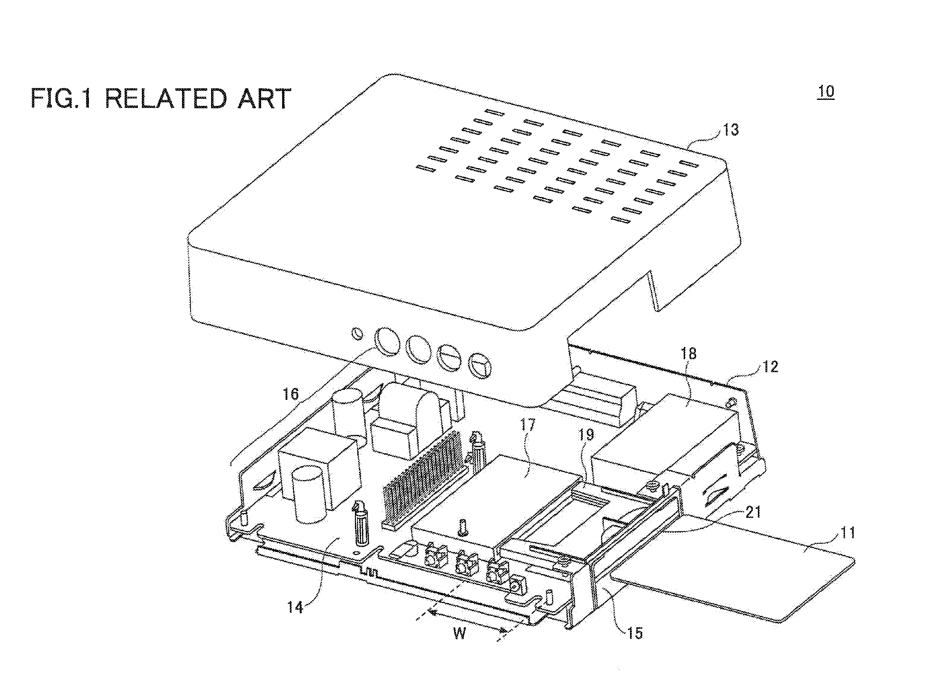

FIG. 1 is a perspective view of a related art receiver 10. When a card 11 for receiving a digital broadcasting signal is inserted, the related art receiver 10 functions as a receiver of the digital broadcasting signal.

The receiver 10 includes a main body part 12 and a cover part 13. An analog board 14 and a digital board not illustrated in FIG. 1 are received in the main body part 12. A card inserting part 15 is formed in the main body part 12. An electric power supply circuit 16, a connector 17 where the contact type IC card 11 is connected, a tuner 18, and a guide member 19 configured to guide the contact type IC card 11 to the connector 17 are mounted on the analog board 14. A length W of the guide member 19 is designed so that the entirety of the contact type IC card 11 is received in the main body part 12 when the contact type IC card 11 is connected into the connector 17. In addition, the guide member 19 is provided on the analog board 14 so that a card inserting slit 21 is provided at the card inserting part 15.

With this structure, the contact type IC card 11 is guided by the guide member 19 so as to be connected into the connector 17 so that the receiver 10 functions as a receiver. A video displaying device including a card receiving part having a card inserting stand is discussed in Japanese Laid-Open Patent Application Publication No. 2003-55115.

Conventionally, in the receiver, as well as other electronic devices, further miniaturization and cost reduction have been in demand.

### SUMMARY OF THE INVENTION

Accordingly, embodiments of the present invention may provide a novel and useful receiver solving one or more of the problems discussed above.

More specifically, the embodiments of the present invention may provide a receiver that can be miniaturized while a manufacturing cost is reduced.

Another aspect of the embodiments of the present invention may be to provide a receiver including a case main body with an opening for inserting a contact type IC card; an electric power supply board provided in the case main body; a contact type IC card connector where the contact type IC card is expected to be connected; and a tuner configured to receive a digital broadcasting signal, wherein the contact type IC card connector is provided in a position so that an entirety of the contact type IC card is received in the case main body in a case where the contact type IC card is inserted through the inserting opening on the electric power supply board; and the tuner is situated in a position between the inserting opening and the contact type IC card connector, the position being where the tuner does not come in contact with the contact type IC card in the case where the contact type IC card is inserted.

According to the embodiment of the present invention, a receiver can be miniaturized while a manufacturing cost is reduced.

Additional objects and advantages of the embodiments are set forth in part in the description which follows, and in part will become obvious from the description, or may be learned by practice of the invention. The object and advantages of the invention will be realized and attained by means of the elements and combinations particularly pointed out in the appended claims. It is to be understood that both the foregoing general description and the following detailed description are exemplary and explanatory and are not restrictive of the invention as claimed.

### BRIEF DESCRIPTION OF THE DRAWINGS

FIG. 1 is a perspective view of a related art receiver;
FIG. 2 is a first exploded perspective view of a receiver of an embodiment of the present invention;
FIG. 3 is a second exploded perspective view of the receiver of the embodiment of the present invention;
FIG. 4 is a cross-sectional view taken along a line A-A of FIG. 2 of the receiver of the embodiment of the present invention;
FIG. 5 is a view for explaining a digital board of the embodiment of the present invention; and
FIG. 6 is a view for explaining a debug circuit port of the digital board.

### DETAILED DESCRIPTION OF THE PREFERED EMBODIMENTS

In an embodiment of the present invention, by effectively using a space which is not conventionally used and making a size of a guide member configured to guide a contact type IC card smaller, it is possible to realize a receiver that can be miniaturized while a manufacturing cost is reduced.

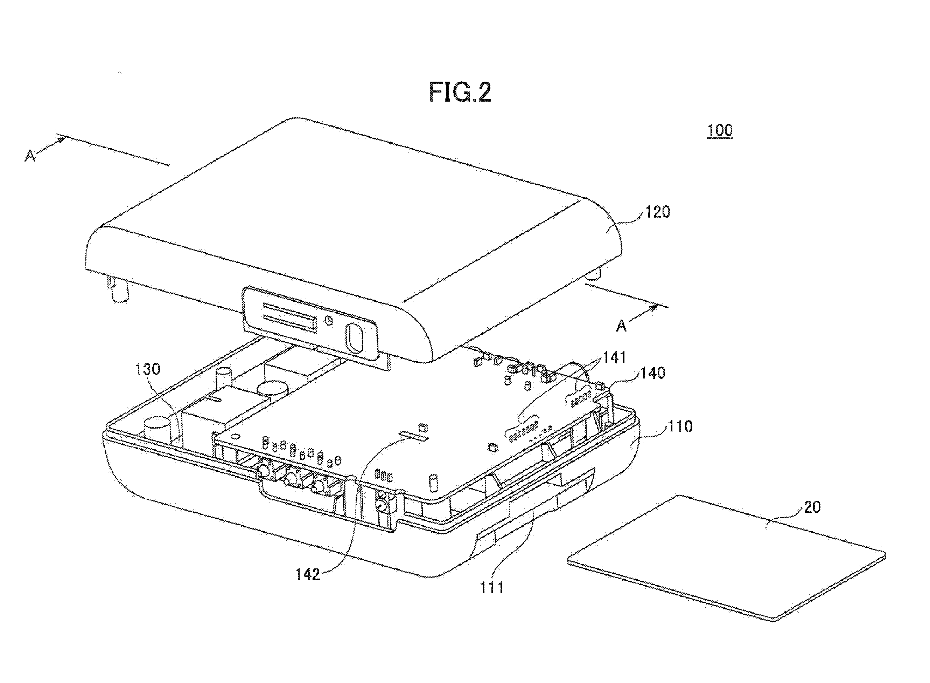

A description of a receiver is given below, with reference to the FIG. 2 through FIG. 6 of embodiments of the present invention.

FIG. 2 is a first exploded perspective view of a receiver of an embodiment of the present invention.

A receiver 100 of the embodiment of the present invention is a device, such as a set-top box, configured to receive a digital broadcasting signal. The receiver 100 of the embodiment of the present invention functions as a receiver when a contact type IC (Integrated Circuit) card, called a B-CAS card 20, is inserted. An IC chip, not illustrated in FIG. 2, is mounted on the B-CAS card 20. An identification number and a cryptographic key peculiar to the card are stored in the IC chip.

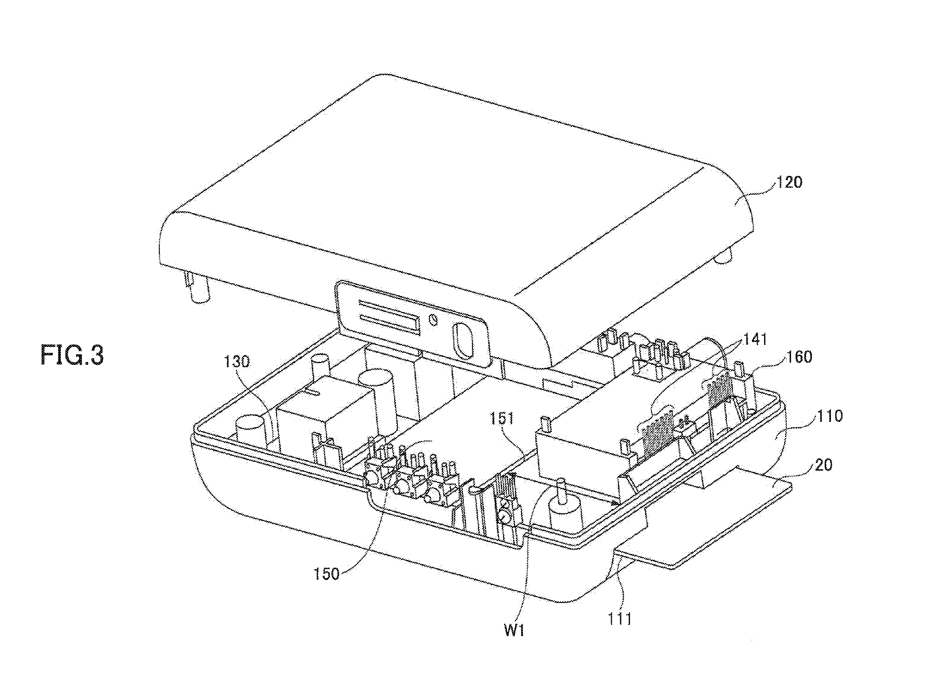

The receiver 100 includes a case main body 110 and a cover part 120. An electric power supply board 130 and a digital board 140 are received in the case main body 110. A inserting opening 111 where the B-CAS card 20 is inserted is formed in the case main body 110. By inserting the B-CAS card 20 into the inserting opening 111, the B-CAS card is connected to a B-CAS card connector 150 (see FIG. 3) discussed below.

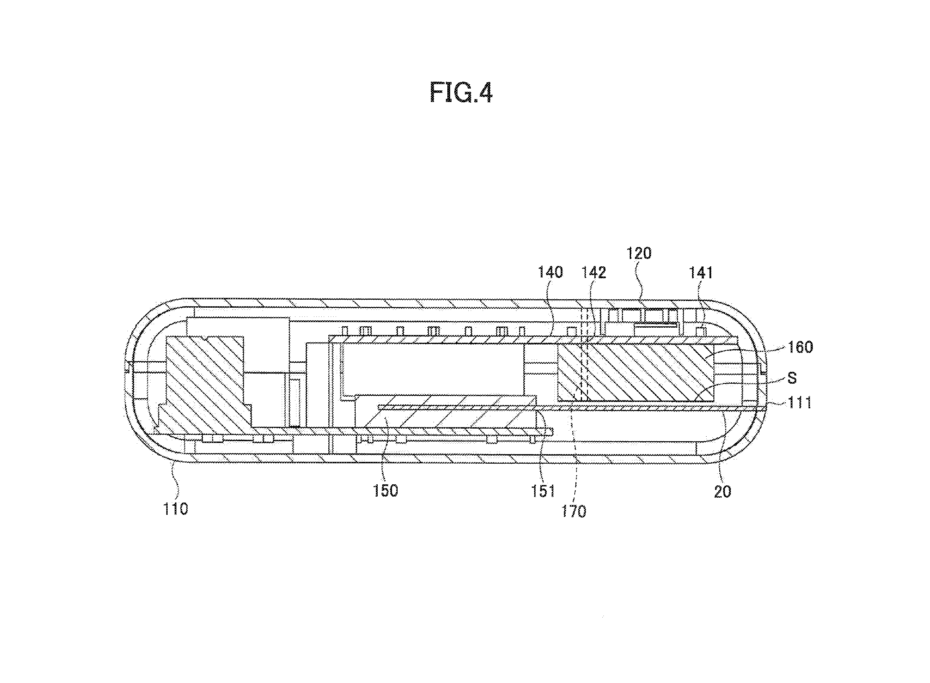

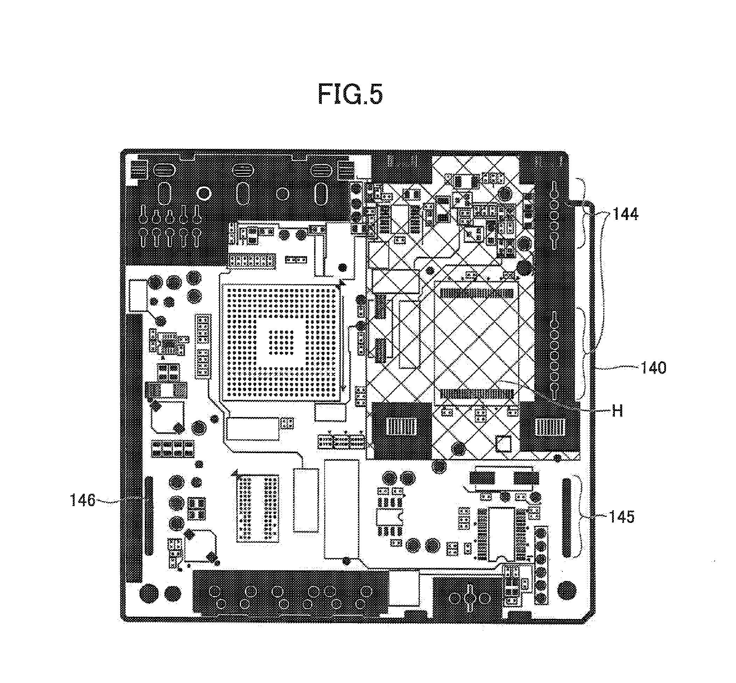

An electric power supply circuit mainly consisting of an analog circuit and the B-CAS card connector 150 are mounted on the electric power supply board 130 of the embodiment of the present invention. Two-surface (both-surfaces) mounting can be realized on the digital board 140 of the embodiment of the present invention. As shown in FIG. 5, a digital circuit such as a CPU (Central Processing Unit) or a memory chip is mounted on a surface of the digital board 140 situated at the cover part 120 side. As shown in FIG. 4, a tuner 160 is mounted on a surface of the digital board 140 situated at an opposite side to the cover part 120 side. The tuner 160 is configured to receive a digital broadcasting signal. Pins 141 shown in FIG. 2 are pins of the tuner 160 (See FIG. 3).

In the receiver 100 of the embodiment of the present invention, a guide member 170 is provided at the cover part 120 (See FIG. 4). The guide member 170 is a plate-shaped member which is formed in a body at the cover part 120. The guide member 170 is configured to guide the B-CAS card 20 to a card inserting opening 151 of the B-CAS card connector 150. A piercing hole 142 is formed in the digital board 140. The piercing hole 142 is configured have the guide member 170 inserted in a case where the case main body 110 and the cover part 120 are connected to each other. In the receiver 100 of the embodiment of the present invention, in the case where the case main body 110 and the cover part 120 are connected to each other, the guide member 170 is inserted into the piercing hole 142, and the B-CAS card 20 inserted from the inserting opening 111 comes in contact with a head end of the guide member 170 just in front of the B-CAS card connector 150 so as to be guided to the card inserting opening 151.

The receiver 100 of the embodiment of the present invention is further discussed with reference to FIG. 3 and FIG. 4. FIG. 3 is a second exploded perspective view of the receiver 100 of the embodiment of the present invention. FIG. 4 is a cross-sectional view taken along a line A-A of FIG. 2 of the receiver 100 of the embodiment of the present invention.

In FIG. 3, illustration of the digital board 140 is omitted. FIG. 4 shows a state where the B-CAS card 20 is inserted.

As shown in FIG. 3, in the receiver 100 of the embodiment of the present invention, the tuner 160 is provided between the inserting opening 111 of the case main body 110 and the card inserting opening 151 of the B-CAS card connector 150.

The digital board 140 is stacked over the electric power supply board 130 so that the tuner 160 provided on the digital board 140 and the B-CAS card connector 150 provided on the electric power supply board 130 face each other. Since the digital board 140 is stacked over the electric power supply board 130, the tuner 160 is positioned between the inserting opening 111 of the case main body 110 and the card inserting opening 151 of the B-CAS card connector 150.

A length W1 between the inserting opening 111 of the case main body 110 and the card inserting opening 151 of the B-CAS card connector 150 is designed so that an entirety of the B-CAS card 20 is received in the case main body 110 in a case where the B-CAS card 20 is inserted in the B-CAS card connector 150.

In this embodiment, since the tuner 160 is in a space between the inserting opening 111 of the case main body 110 and the card inserting opening 151 of the B-CAS card connector 150, the space being not conventionally used, it is possible to miniaturize the receiver 100. Furthermore, in this embodiment, as shown in FIG. 4, the tuner 160 is positioned so as not to come in contact with the B-CAS card 20 in a case where the B-CAS card 20 is inserted in the B-CAS card connector 150. In other words, the tuner 160 is positioned so as not to be overlapped with the inserting opening 111 and the card inserting opening 151 and thereby a surface S of the tuner 160 does not interfere with the path of the B-CAS card 20 in an inserting direction of the B-CAS card 20 from the inserting opening 111 to the card inserting opening 151 in the case where the B-CAS card 20 is inserted. In this embodiment, with this structure, the B-CAS card 20 can be inserted into the B-CAS card connector 150 without being obstructed by the tuner 160 at the time when the B-CAS card 20 is inserted.

In addition, the tuner 160 of this embodiment functions as an auxiliary guide member configured to assist the guide member 170. In other words, in this embodiment, the B-CAS card 20 is led to the guide member 170 along the surface S of the tuner 160. The B-CAS card 20 is guided by the guide member 170 so as to be inserted into the B-CAS card connector 150.

Thus, in this embodiment, the tuner 160 is provided so that the surface S of the tuner 160 is along the path from the inserting opening 111 to the card inserting opening 151 when the B-CAS card 20 is inserted. With this structure, the tuner 160 can function as the auxiliary guide member from the inserting opening 111 to the guide member 170.

Therefore, the guide member 170 of this embodiment can be a plate-shaped member formed on a rear surface of the cover part 120. Hence, the guide member can have a structure smaller and simpler than that of the related art guide member.

In this embodiment, for example, the guide member 170 may not be provided but only the tuner 160 may be used as the guide member. In this case, the surface S of the tuner 160 may be covered with a resin film or the like. By covering the surface S, it is possible to prevent the surface of the B-CAS card 20 from being damaged by the tuner 160 at the time when the B-CAS card 20 is inserted.

Next, the digital board 140 of this embodiment is discussed. In this embodiment, arrangement of the tuner 160 at the digital board 140 is made in a special manner so that the digital board 140 can be miniaturized.

FIG. 5 is a view for explaining the digital board 140 of the embodiment of the present invention. FIG. 5 shows an example of a board layout at the cover part 120 side of the digital board 140. The tuner 160 is mounted on a surface at a side opposite to the surface shown in FIG. 5 of the digital board 140. In this embodiment, a side of the tuner 160 where the number of pins 141 is larger is positioned at an end part of the digital board 140.

Through holes 144 are formed at an end part of the digital board 140. The through holes 144 are configured to have inserted the pins 141 of the tuner 160. The tuner 160 is mounted on the digital board 140 by inserting the pins 141 into the through holes 144. In this embodiment, since the side of the tuner 160 where the number of pins 141 is larger is positioned at the end part of the digital board 140, it is possible to prevent the through holes 144 from being formed in the vicinity of the center part of the digital board 140. Therefore, in the digital board 140 of this embodiment, it is possible to mount an IC, connected to a large number of signal lines, at an area H situated at an opposite side to an area where the tuner 160 is mounted. Therefore, high integration of the digital board 140 can be achieved.

In addition, in this embodiment, since the tuner 160 is mounted on the digital board 140, a video signal line in the periphery of the tuner 160 is wired to the digital board 140. Therefore, it is possible to reduce noise of the video signal. Furthermore, the number of the signal lines configured to connect the electric power supply board 130 and the digital board 140 to each other can be decreased. The number of pins of a connector configured to connect the electric power supply board 130 and the digital board 140 can be made small.

In addition, a debug circuit port is provided at an end part of the digital board 140. Because of this structure, the digital board 140 can be miniaturized.

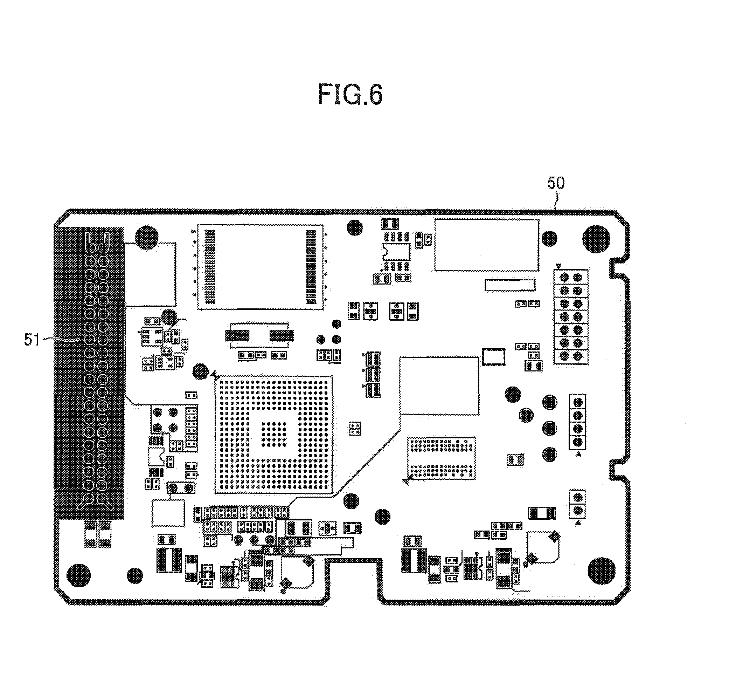

Next, with reference to FIG. 6, a debug circuit port of the related art digital board is discussed. Here, FIG. 6 is a view for explaining the debug circuit port of the related art digital board.

The digital board 50 shown in FIG. 6 is received in, for example, the related art receiver 10. In the related art, when the receiver 10 is developed, a digital board for development is formed and a debugging process of an IC mounted on the board is applied by using the digital board for development. A connector for debugging is provided on the digital board for development. The connector for debugging is predetermined based on a specification of an IC such as a CPU being a subject of the debugging. When the debugging is performed, the connector for debugging is connected to a debug device or the like.

In the conventional art, when the debugging for the digital board for development is completed, a digital board for mass production is manufactured in a state where the connector for debugging is removed. The digital board 50 shown in FIG. 6 is the digital board for mass production.

Since the digital board 50 is produced in large quantities in a state where the connector for debugging is removed from the digital board for development, a pattern 51 for attaching the connector for debugging remains on the digital board. This pattern 51 is not necessary for the digital board for mass production. An area where the pattern 51 is formed is a useless area.

In this embodiment, by eliminating a pattern unnecessary for the digital board for mass production, miniaturization of the digital board 140 is realized.

Referring back to FIG. 5, the digital board 140 of this embodiment includes debug circuit ports 145 and 146 configured to connect a debug circuit. The debug circuit ports 145 and 146 are formed in component prohibited areas situated at both ends of the digital board 140. The component prohibited areas are used for supporting the digital board 140 in a manufacturing process of the digital board 140. It is prohibited to mount components in the component prohibited areas. In addition, in the debug circuit ports 145 and 146 of this embodiment, the same number of the ports as the number of signals necessary for debugging the IC mounted on the digital board 140 is formed. Therefore, the number of the ports of the debug circuit ports 145 and 146 is smaller than the number of pins of the related art debug connector.

When the debugging of the digital board 140 of this embodiment is performed, the debug circuits which are separately made in advance are connected into the debug circuit ports 145 and 146 so that the debugging is performed. With this structure, in this embodiment, it is possible to perform the debugging for each of the digital boards 140 even after the mass production of the digital boards 140. Therefore, in a case where a problem occurs in the product, it is possible to inspect every product for the problem.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiments of the present invention have been described in detail, it should be understood that the various changes, substitutions, and alterations could be made hereto without departing from the spirit and scope of the invention.

Thus, according to the embodiment of the present invention, it is possible to provide a receiver (100), including a case main body (110) with an opening (111) for inserting a contact type IC card (20); an electric power supply board (130) provided in the case main body (100); a contact type IC card connector (150) where the contact type IC card (20) is expected to be connected; and a tuner (160) configured to receive a digital broadcasting signal, wherein the contact type IC card connector (150) is provided in a position so that an entirety of the contact type IC card (20) is received in the case main body (110) in a case where the contact type IC card (20) is inserted through the inserting opening (111) on the electric power supply board (130); and the tuner (160) is situated in a position between the inserting opening (111) and the contact type IC card connector (150), the position being where the tuner (160) does not come in contact with the contact type IC card (20) in the case where the contact type IC card (20) is inserted.

The tuner (160) may be provided on a digital board (140), and the digital board (140) is received in the case main body (110).

The receiver (100) may further include a cover part (120) configured to cover the case main body (110); and a plate-shaped guide member (170) formed from the cover part (120) in a direction toward the case main body (110), the plate-shaped guide member (170) being configured to guide the contact type IC card (20) to the contact type IC card connector (150), wherein a piercing hole (142) is formed in the digital board (140), and the piercing hole (142) is configured to have the plate-shaped guide member (170) inserted.

The contact type TC card connector (150) may be provided on the electric power supply board (130); and the electric power supply board (130) and the digital board (140) may face each other.

The tuner (160) may be provided so that a surface of the tuner (160) is along a path of the connect type IC card (20) from the inserting opening (111) to a card inserting opening (151) of the contact type card connector (150).

It should be noted that the numerical references in the parentheses mentioned above are provided for easy understanding and are just examples. The interpretation of claim language is not limited to these examples.

## Claims

1. A receiver, comprising:
a case main body with an opening for inserting a contact type IC card;
an electric power supply board provided in the case main body;
a contact type IC card connector where the contact type IC card is expected to be connected; and
a tuner configured to receive a digital broadcasting signal,
wherein the contact type IC card connector is provided in a position so that an entirety of the contact type IC card is received in the case main body in a case where the contact type IC card is inserted through the inserting opening on the electric power supply board; and
the tuner is situated in a position between the inserting opening and the contact type IC card connector, the position being where the tuner does not come in contact with the contact type IC card in the case where the contact type IC card is inserted.

2. The receiver as claimed in claim 1, wherein the tuner is provided on a digital board; and
the digital board is received in the case main body.

3. The receiver as claimed in claim 2, further comprising:
a cover part configured to cover the case main body; and
a plate-shaped guide member formed from the cover part in a direction toward the case main body, the plate-shaped guide member being configured to guide the contact type IC card to the contact type IC card Connector,
wherein a piercing hole is formed in the digital board, and the piercing hole is configured to have the plate-shaped guide member inserted.

4. The receiver as claimed in claim 2, wherein the contact type IC card connector is provided on the electric power supply board; and
the electric power supply board and the digital board face each other.

5. The receiver as claimed in claim 1, wherein the tuner is provided so that a surface of the tuner is along a path of the contact type IC card from the inserting opening to a card inserting opening of the contact type card connector.
